# EUROPEAN PATENT APPLICATION

(11) **EP 3 026 970 A1**
(43) Date of publication of application: **01.06.2016**
(21) Application number: 14829859.9
(22) Date of filing: 02.07.2014
(51) Int. Cl.: H04W 72/04, H04W 16/32, H04W 28/04, H04W 72/12

(54) **RADIO COMMUNICATION SYSTEM, BASE STATION APPARATUS, TERMINAL APPARATUS, RADIO COMMUNICATION METHOD AND INTEGRATED CIRCUIT**

(30) Priority: 25.07.2013 JP 2013154240
(71) Applicant: Sharp Kabushiki Kaisha, Osaka-shi, Osaka 545-8522 (JP)
(72) Inventor: KATO, Yasuyuki, Osaka-shi, Osaka 545-8522 (JP); UEMURA, Katsunari, Osaka-shi, Osaka 545-8522 (JP); TSUBOI, Hidekazu, Osaka-shi, Osaka 545-8522 (JP)
(74) Representative: Müller-Boré & Partner Patentanwälte PartG mbB
(86) International application number: PCT/JP2014/067633
(87) International publication number: WO 2015/012077

(57) **Abstract**

A wireless communication system according to an aspect of the present invention is a wireless communication system in which a first base station apparatus and a second base station apparatus communicate with a terminal apparatus, in which the first base station apparatus and/or the second base station apparatus notify the terminal apparatus of data control information related to data transmission and reception of the terminal apparatus and timer information used for notification of a buffer status report, and the terminal apparatus notifies any one of the first base station apparatus and the second base station apparatus of the buffer status report of uplink data based on the data control information in a case where the notification of the buffer status report is triggered.

## Description

### TECHNICAL FIELD

The present invention relates to a wireless communication system, a base station apparatus and a terminal apparatus, and more particularly, to a wireless communication system, a base station apparatus, a terminal apparatus, a wireless communication method, and an integrated circuit which are related to the control of data.

The present application claims priority to Japanese Patent Application No. 2013-154240 filed in the Japanese Patent Office on July 25, 2013, the disclosure of which is herein incorporated by reference in its entirety.

### BACKGROUND ART

In the 3GPP (3rd generation partnership project), a W-CDMA system has been standardized as a 3rd generation cellular mobile communication system, and services have been launched. HSDPA having a higher communication speed has been also standardized, and services have been launched.

Meanwhile, an evolved 3rd radio access (evolved universal terrestrial radio access: hereinafter, referred to as "EUTRA") technology has been standardized, and services have been launched in the 3GPP. As a downlink communication system of EUTRA, an OFDM (orthogonal frequency division multiplexing) system has been employed that has resistance to multipath interference and is appropriate for high-speed transmission. As an uplink communication system, there has been employed a DFT (discrete Fourier transform)-spread OFDM system of SC-FDMA (single carrier-frequency division multiple access) that can reduce the PAPR (peak-to-average power ratio) of a transmission signal in consideration of cost and power consumption of mobile station apparatuses.

In the 3GPP, discussion on the Advanced-EUTRA which is further evolution of the EUTRA technology has been started. In the Advanced-EUTRA, it is assumed that communication is performed at a maximum transmission rate of 1 Gbps or more in a downlink and at a transmission rate of 500 Mbps or more in an uplink by using a band up to a maximum bandwidth of 100 MHz in the uplink and the downlink.

In the Advanced-EUTRA, it is considered that a maximum bandwidth of 100 MHz is achieved by binding a plurality of bands compatible with the EUTRA such that a mobile station apparatus of the EUTRA can be accommodated. In the Advanced-EUTRA, one band of 20 MHz or less in the EUTRA is called a component carrier (CC). The component carrier is also called a cell. The binding of the bands of 20 MHz or less is called carrier aggregation (CA) (NPL 1).

In the Advanced-EUTRA, it has been examined that in-frequency carrier aggregation or inter-frequency carrier aggregation is performed in a macrocell and small cells present in the coverage of the macrocell. The small cells being present in the coverage of the macrocell may mean that frequencies are different. NPL 2 discloses that in the communication between the base station apparatus and the mobile station apparatus at the time of the carrier aggregation of the macrocell and the small cell, control information (control-plane information) is transmitted in the macrocell, and user information (user-plane information) is transmitted in the small cell. The technology disclosed in NPL 2 in which the carrier aggregation of the macrocell and the small cell is called dual connect (or dual connectivity).

### CITATION LIST

### [NON PATENT DOCUMENT]

[NON PATENT DOCUMENT 1] 3GPP TS (Technical Specification) 36.300, V11.5.0 (2013-03), Evolved Universal Terrestrial Radio Access (E-UTRA) and Evolved Universal Terrestrial Radio Access Network (E-UTRAN), Overall description Stage2
[NON PATENT DOCUMENT 2] 3GPP TR (Technical Report) 36.842, V0.2.0 (2013-05), Study on Small Cell Enhancements for E-UTRA and E-UTRAN - Higher layer aspects (release 12)

### DISCLOSURE OF THE INVENTION

### Problems to be Solved by the Invention

However, as disclosed in NPL 2, in the communication between the base station apparatus and the mobile station apparatus, in the case where the control information is transmitted and received between the mobile station apparatus and the base station apparatus as the macrocell and the user information is transmitted and received between the mobile station apparatus and the base station apparatus as the small cell, it is necessary to perform control such that the control information and the user information are transmitted from an appropriate cell.

Since the base station apparatuses are connected through a low-speed line having delay, it is considered that the base station apparatus as the macrocell and the base station apparatus as the small cell independently perform the scheduling of downlink and uplink data and the transmission of downlink data with respect to the mobile station apparatus in consideration of the delay of the line between the base station apparatuses. In order to independently perform the data scheduling, both the base station apparatuses need to acquire information related to appropriate uplink data from the mobile station apparatus.

The present invention has been made in view of such circumstances, and it is an object of the present invention to provide a wireless communication system, a base station apparatus, a mobile station apparatus, a wireless communication method, and an integrated circuit which are capable of efficiently performing the scheduling of a base station apparatus at the time of dual connect.

### Means for Solving the Problems

(1) In order to achieve the aforementioned object, the present invention provides the following means. That is, according to an aspect of the present invention, there is provided a wireless communication system in which a first base station apparatus and a second base station apparatus communicate with a terminal apparatus, in which the first base station apparatus and/or the second base station apparatus notify the terminal apparatus of data control information related to data transmission and reception of the terminal apparatus and timer information used for notification of a buffer status report, and the terminal apparatus notifies any one of the first base station apparatus and the second base station apparatus of the buffer status report of uplink data based on the data control information in a case where the notification of the buffer status report is triggered.
(2) In the wireless communication system, in a case where data is newly generated in a state in which an uplink buffer of the terminal apparatus is in an empty state, the first base station apparatus or the second base station apparatus corresponding to a logical channel or a logical channel group indicated by the data control information may be notified of buffer status information of uplink data.
(3) In the wireless communication system, in a case where a timer notified by the timer information expires and data is present in the uplink buffer, the first base station apparatus or the second base station apparatus corresponding to a logical channel or a logical channel group indicated by the data control information may be notified of buffer status information of uplink data.
(4) According to another aspect of the present invention, there is provided a base station apparatus that is connected to another base station apparatus, and communicates with a terminal apparatus, the base station apparatus being adapted to: receive, from another base station apparatus, a logical channel of data, a priority of the logical channel of data, data control information indicating an association between the logical channel of the data and a logical channel group and timer information used for notification of a buffer status report; and notify the terminal apparatus of the data control information, the timer information, data control information of its own base station apparatus, timer information of the own base station apparatus, and associated information between the base station apparatus and the logical channel indicating which base station apparatus transmits data of which logical channel.
(5) According to still another aspect of the present invention, there is provided a terminal apparatus that communicates with a first base station apparatus and a second base station apparatus, the terminal apparatus being adapted to: receive, from the first base station apparatus and/or the second base station apparatus, data control information related to data transmission and reception and timer information used for notification of a buffer status report; and notify any one of the first base station apparatus and the second base station apparatus of the buffer status report of uplink data based on the data control information in a case where the notification of the buffer status report is triggered.
(6) The terminal apparatus, in a case where data is newly generated in a state in which an uplink buffer is in an empty state, may notify any one of the first base station apparatus and the second base station apparatus corresponding to a logical channel or a logical channel group indicated by the data control information of buffer status information of uplink data.
(7) The terminal apparatus, in a case where a timer notified by the timer information expires and data is present in the uplink buffer, may notify any one of the first base station apparatus and the second base station apparatus corresponding to a logical channel or a logical channel group indicated by the data control information of buffer status information of uplink data.
(8) According to still another aspect of the present invention, there is provided a wireless communication method applied to a wireless communication system in which a first base station apparatus and a second base station apparatus communicate with a terminal apparatus, the method including: a step of notifying, by the first base station apparatus and/or the second base station apparatus, the terminal apparatus of data control information related to data transmission and reception of the terminal apparatus and timer information used for notification of a buffer status report; and a step of notifying, by the terminal apparatus, any one of the first base station apparatus and the second base station apparatus of the buffer status report of uplink data based on the data control information in a case where the notification of the buffer status report is triggered.
(9) According to still another aspect of the present invention, there is provided an integrated circuit applied to a base station apparatus which is connected to another base station apparatus and communicates with a terminal apparatus, the integrated circuit including: means for receiving, from another base station apparatus, a logical channel of data, a priority of the logical channel of data, data control information indicating an association between the logical channel of the data and a logical channel group and timer information used for notification of a buffer status report; and means for notifying the terminal apparatus of the data control information, the timer information, data control information of its own base station apparatus, timer information of the own base station apparatus, and associated information between the base station apparatus and the logical channel indicating which base station apparatus transmits data of which logical channel.
(10) According to still another aspect of the present invention, there is provided an integrated circuit applied to a terminal apparatus that communicates with a first base station apparatus and a second base station apparatus, the integrated circuit including: means for receiving, from the first base station apparatus and/or the second base station apparatus, data control information related to data transmission and reception and timer information used for notification of a buffer status report, and for notifying any one of the first base station apparatus and the second base station apparatus of a buffer status report of uplink data based on the data control information in a case where the notification of the buffer status report is triggered.

### Effects of the Invention

According to the aspect of the present invention, it is possible to efficiently perform data transmission and reception between a base station apparatus in a macrocell or a base station apparatus in a small cell and a mobile station apparatus.

### BRIEF DESCRIPTION OF THE DRAWINGS

[Fig. 1] Fig. 1 is a diagram showing an example of the structure of a mobile station apparatus according to an embodiment of the present invention.
[Fig. 2] Fig. 2 is a diagram showing an example of the structure of a base station apparatus according to the embodiment of the present invention.
[Fig. 3] Fig. 3 is an explanatory diagram for describing an example of dual connect.
[Fig. 4] Fig. 4 is an explanatory diagram for describing an example of the dual connect.
[Fig. 5] Fig. 5 is a diagram showing an example of the structure of a physical channel in EUTRA.
[Fig. 6] Fig. 6 is a diagram showing an example of the structure of a downlink channel in the EUTRA.
[Fig. 7] Fig. 7 is a diagram showing an example of the structure of an uplink channel in the EUTRA.
[Fig. 8] Fig. 8 is a diagram showing an example of the structure of a communication protocol related to control information of the base station apparatus and the mobile station apparatus.
[Fig. 9] Fig. 9 is a diagram showing an example of the structure of a communication protocol related to user information of the base station apparatus and the mobile station apparatus.
[Fig. 10] Fig. 10 is an explanatory diagram for describing an example of the dual connect.

### MODE FOR CARRYING OUT THE INVENTION

An OFDM scheme is adopted as a downlink of EUTRA. A single carrier communication scheme of a DFT-spread OFDM scheme is adopted as an uplink of the EUTRA.

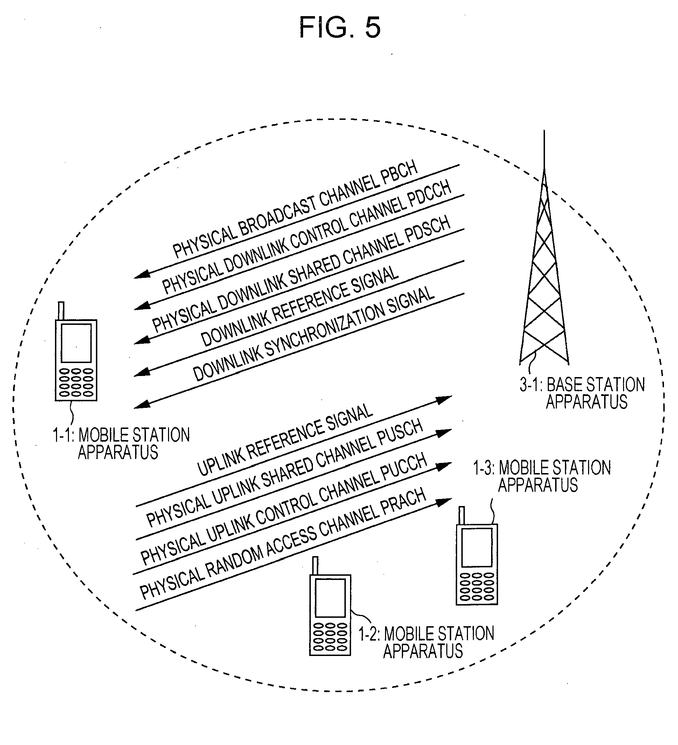

Fig. 5 is a diagram showing the structure of a physical channel of the EUTRA. A physical channel of the downlink includes a physical downlink shared channel PDSCH, a physical downlink control channel PDCCH, and a physical broadcast channel PBCH. In addition, there are physical signals such as a downlink synchronization signal and a downlink reference signal (NPL 1).

A physical channel of the uplink includes a physical random access channel PRACH, a physical uplink shared channel PUSCH, and a physical uplink control channel PUCCH. In addition, there is a physical signal such as an uplink reference signal (NPL 1).

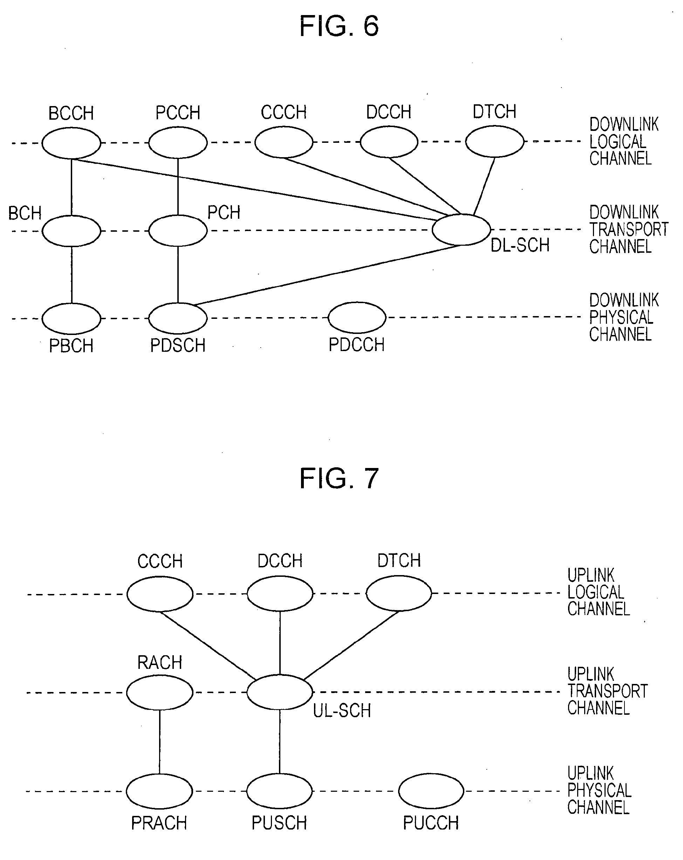

Fig. 6 is a diagram showing a channel structure of the downlink of the EUTRA. The channel of the downlink shown in Fig. 6 includes a logical channel, a transport channel, and a physical channel. The logical channel defines the type of a data transmission service transmitted and received in a medium access control (MAC) layer. The transport channel defines the characteristics of data to be transmitted by a wireless interface and how to transmit the data. The physical channel is a physical channel that delivers data transferred to a physical layer by the transport channel.

The logical channel of the downlink includes a broadcast control channel BCCH, a paging control channel PCCH, a common control channel CCCH, a dedicated control channel DCCH, and a dedicated traffic channel DTCH.

The transport channel of the downlink includes a broadcast channel BCH, a paging channel PCH, and a downlink shared channel DL-SCH.

The physical channel of the downlink includes a physical broadcast channel PBCH, a physical downlink control channel PDCCH, and a physical downlink shared channel PDSCH. These channels are transmitted and received between a base station apparatus and a mobile station apparatus.

Hereinafter, the logical channel will be described. The broadcast control channel BCCH is a downlink channel used to broadcast system control information. The paging control channel PCCH is a downlink channel used to transmit paging information, and is used in a case where a network does not know a cell position of the mobile station apparatus. The common control channel CCCH is a channel used to transmit control information between the mobile station apparatus and the network, and is used by the mobile station apparatus that does not have radio resource control (RRC) connection with the network.

The dedicated control channel DCCH is a point-to-point duplex channel, and is a channel used to transmit individual control information between the mobile station apparatus and the network. The dedicated control channel DCCH is used by the mobile station apparatus having RRC connection. The dedicated traffic channel DTCH is a point-to-point duplex channel, and is a dedicated channel of one mobile station apparatus, and is used to transport user information (unicast data).

Hereinafter, the transport channel will be described. The broadcast channel BCH is broadcasted to all cells according to a fixed or previously defined transmission format. In the downlink shared channel DL-SCH, HARQ (hybrid automatic repeat request), dynamic adaptation radio link control, discontinuous reception (DRX) are supported, and it is necessary for the DL-SCH to be broadcasted to all the cells.

In the paging channel PCH, the DRX is supported, and it is necessary for the PCH to be broadcast to all the cells. The paging channel PCH is mapped to a physical resource dynamically used for the traffic channel or other control channel, that is, the physical downlink shared channel PDSCH.

Hereinafter, the physical channel will be described. The physical broadcast channel PBCH maps the broadcast channel BCH at a cycle of 40 milliseconds. The physical downlink control channel PDCCH is a channel used to notify the mobile station apparatus of the resource assignment of the downlink shared channel PDSCH, hybrid automatic repeat request (HARQ) information for the downlink data, and an uplink transmission permission (uplink grant) which is the resource assignment of the physical uplink shared channel PUSCH. The physical downlink shared channel PDSCH is a channel used to transmit downlink data or paging information.

Hereinafter, the channel mapping will be described. As shown in Fig. 6, in the downlink, the mapping of the transport channel to the physical channel is performed as follows. The broadcast channel BCH is mapped to the physical broadcast channel PBCH. The paging channel PCH and the downlink shared channel DL-SCH are mapped to the physical downlink shared channel PDSCH. The physical downlink control channel PDCCH is independently used as the physical channel.

In the downlink, the mapping of the logical channel to the transport channel is performed as follows. The paging control channel PCCH is mapped to the paging channel PCH. The broadcast control channel BCCH is mapped to the broadcast channel BCH and the downlink shared channel DL-SCH. The shared control channel CCCH, the dedicated control channel DCCH and the dedicated traffic channel DTCH are mapped to the downlink shared channel DL-SCH.

Fig. 7 is a diagram showing a channel structure of an uplink of the EUTRA. The channel of the uplink shown in Fig. 7 includes a logical channel, a transport channel, and a physical channel. The definitions of the channels are the same as those of the channels of the downlink.

The logical channel of the uplink includes a common control channel CCCH, a dedicated control channel DCCH, and a dedicated traffic channel DTCH.

The transport channel of the uplink includes an uplink shared channel UL-SCH, and a random access channel RACH.

The physical channel of the uplink includes a physical uplink control channel PUCCH, a physical uplink shared channel PUSCH, and a physical random access channel PRACH. These channels are transmitted and received between the base station apparatus and the mobile station apparatus. The physical random access channel PRACH is used to transmit a random access preamble for acquiring transmission timing information to the base station apparatus from the mobile station apparatus. The random access preamble is transmitted during a random access procedure.

Hereinafter, the logical channel will be described. The common control channel CCCH is a channel used to transmit control information between the mobile station apparatus and the network, and is used by the mobile station apparatus which does not establish radio resource control (RRC) connection with the network.

The dedicated control channel DCCH is a point-to-point duplex channel, and is a channel used to transmit individual control information between the mobile station apparatus and the network. The dedicated control channel DCCH is used by the mobile station apparatus having RRC connection. The dedicated traffic channel DTCH is point-to-point duplex channel, is a dedicated channel of one mobile station apparatus, and is used to transport user information (unicast data).

Hereinafter, the transport channel will be described. In the uplink shared channel UL-SCH, HARQ (hybrid automatic repeat request), dynamic adaptation radio link control, and discontinuous transmission (DTX) are supported. In the random access channel RACH, limited control information is transmitted.

Hereinafter, the physical channel will be described. The physical uplink control channel PUCCH is a channel used to notify the base station apparatus of response information (ACK/NACK) to the downlink data, radio quality information of the downlink, and a transmission request (scheduling request (SR)) of uplink data. The physical uplink shared channel PUSCH is a channel used to transmit the uplink data. The physical random access channel is a channel that is used to transmit the random access preamble.

Hereinafter, the channel mapping will be described. As shown in Fig. 7, in the uplink, the mapping of the transport channel to the physical channel is performed. The uplink shared channel UL-SCH is mapped to the physical uplink shared channel PUSCH. The random access channel RACH is mapped to the physical random access channel PRACH. The physical uplink control channel PUCCH is a physical channel to which a transport channel is not mapped.

In the uplink, the mapping of the logical channel to the transport channel is performed as follows. The common control channel CCCH, the dedicated control channel DCCH and the dedicated traffic channel DTCH are mapped to the uplink shared channel UL-SCH.

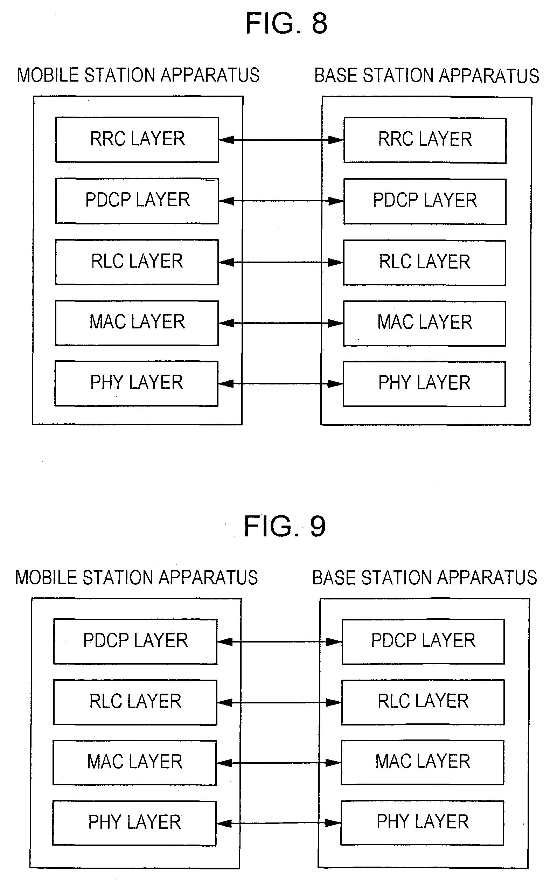

Fig. 8 shows a protocol stack which handles control data of the mobile station apparatus and the base station apparatus of the EUTRA. Fig. 9 is a protocol stack which handles user data of the mobile station apparatus and the base station apparatus of the EUTRA. Figs. 8 and 9 will be described below.

A physical layer (PHY layer) provides a transport service to a higher layer by using the physical channel. The PHY layer is connected to a medium access control layer (MAC layer) as a higher layer by using the transport channel. Data moves between the MAC layer, the PHY layer and layers by using the transport channel. Data is transmitted and received between the PHY layers of the mobile station apparatus and the base station apparatus by using the physical channel.

The MAC layer maps various logical channels to various transport channels. The MAC layer is connected to a radio link control layer (RLC layer) as a higher layer by using the logical channel. The logical channel is greatly classified according to the kind of information to be transported, and is classified into a control channel which transports the control information and a traffic channel which transport the user information. The MAC layer has a function of controlling the PHY layer in order to perform discontinuous reception/discontinuous transmission (DRX/DTX), a function of performing the random access procedure, a function of notifying of information regarding transmission power, and a function of performing HARQ control.

The RLC layer controls data size such that the higher layer can appropriately transmit data by performing segmentation and concatenation on data received from the higher layer. The RLC layer has a function of guaranteeing QoS (quality of service) required by data. That is, the RLC layer has a function such as retransmission control of data.

A packet data convergence protocol layer (PDCP layer) has a header compression function of compressing control information in order to efficiently transport an IP packet which is user data in a wireless section. The PDCP layer has a function of data ciphering.

The radio resource control layer (RRC layer) defines only control information. The RRC layer configures or reconfigures a radio bearer (RB), and controls the logical channel, the transport channel and the physical channel. The RB is classified into a signaling radio bearer (SRB) and a data radio bearer (DRB), and the SRB is used as a path for transmitting an RRC message which is control information. The DRB is used as a path for transmitting user information. The respective RBs are configured between the RRC layers of the base station apparatus and the mobile station apparatus.

The PHY layer corresponds to a physical layer as a first layer in a layered structure of an open systems interconnection (OSI) model that is generally known, the MAC layer, the RLC layer and the PDCP layer correspond to a data link layer as a second layer of the OSI model, and the RRC layer corresponds to a network layer as a third layer of the OSI model.

The random access procedure will be described below. The random access procedure includes two access procedures including a contention based random access procedure and a non-contention based random access procedure (NPL 1).

The contention based random access procedure is a random access procedure in which collision between the mobile station apparatuses is likely to occur. The contention based random access procedure is performed by a scheduling request in a case where the uplink data is transmitted to the mobile station apparatus in a state in which the mobile station apparatus is connected to the base station apparatus but the uplink is not synchronized or in a case where initial access is performed in a state in which the mobile station apparatus is not connected to (does not communicate with) the base station apparatus.

The non-contention based random access procedure is a random access procedure in which collision between the mobile station apparatuses does not occur. In the non-contention based random access procedure, the mobile station apparatus starts the random access procedure by being instructed from the base station apparatus in a special case such as a case where the transmission timing of the mobile station apparatus is not valid or handover in order to rapidly achieve the uplink synchronization between the mobile station apparatus and the base station apparatus in a case where the base station apparatus and the mobile station apparatus are being connected but the uplink is not synchronized. The non-contention based random access procedure is instructed by a message of the radio resource control (RRC: layer 3) layer and control data of the physical downlink control channel PDCCH.

The contention based random access procedure will be briefly described. Initially, a mobile station apparatus 1-1 transmits the random access preamble to a base station apparatus 3-1 (message 1:(1), step S1). The base station apparatus 3-1 received the random access preamble transmits the response (random access response) to the random access preamble to the mobile station apparatus 1-1 (message 2:(2), step S2). The mobile station apparatus 1-1 transmits the higher layer (layer2/layer3) message based on scheduling information included in the random access response (message 3:(3), step S3). The base station apparatus 3-1 transmits a collision check message to the mobile station apparatus 1-1 received the higher layer message of (3) (message 4:(4), step S4). The contention based random access is also referred to random preamble transmission.

The non-contention based random access procedure will be briefly described. Initially, the base station apparatus 3-1 notifies the mobile station apparatus 1-1 of a preamble number (or a sequence number) and a random access channel number to be used (message 0: (1)', step S11). The mobile station apparatus 1-1 transmits a random access preamble of a designated preamble number to a designated random access channel RACH (message 1:(2)', step S12). The base station apparatus 3-1 received the random access preamble transmits a response (random access response) to the random access preamble to the mobile station apparatus 1-1 (message 2:(3)', step S13). However, in a case where a value of the notified preamble number is 0, the contention based random access procedure is performed. The non-contention based random access procedure is also referred to as dedicated preamble transmission.

The scheduling request (SR) will be described below. The physical uplink control channel PUCCH is used to transmit a response (ACK/NACK) of the downlink data transmitted in the physical downlink shared channel PUSCH, the radio channel quality information (channel quality indicator: CQI) of the downlink, and a transmission request (scheduling request) of the uplink data. In a case where the mobile station apparatus 1-1 performs the transmission request of the uplink data, the scheduling request is transmitted to the base station apparatus 3-1 by using the physical uplink control channel PUCCH assigned from the base station apparatus 3-1.

In a case where the physical uplink shared channel PUSCH is assigned from the base station apparatus 3-1 after the scheduling request is transmitted, the mobile station apparatus 1-1 transmits a buffer status report (BSR) indicating buffer status information of the transmission data of the mobile station apparatus 1-1 in the assigned physical uplink shared channel PUSCH. The base station apparatus 3-1 performs the uplink data scheduling on the mobile station apparatus 1-1 based on the buffer status report.

In a case where the physical uplink shared channel PUSCH is not assigned from the base station apparatus 3-1 after the scheduling request is transmitted, the mobile station apparatus 1-1 retransmits the scheduling request. In a case where the physical uplink shared channel PUSCH is not assigned from the base station apparatus 3-1 even though the retransmission of the scheduling request is repeated, the mobile station apparatus 1-1 releases the assigned physical uplink control channel PUCCH and uplink reference signal, and performs the random access procedure for acquiring the scheduling request. In the scheduling request due to the random access procedure, the mobile station apparatus 1-1 transmits the buffer status report through the transmission of the message 3.

Hereinafter, the functions of the MAC layer of the mobile station apparatus will be described in detail. The MAC layer has a function of mapping each logical channel to the transport channel. This procedure is called a logical channel prioritization (LCP) procedure. In a basic LCP procedure, a transmission priority of the transmission data is determined in consideration of a priority of each logical channel and a transmission bit rate (Prioritized Bit Rate: PBR) needed to be transmitted for a predetermined period corresponding to the QoS of the radio bearer, and data having a higher transmission priority at a point of time when the uplink grant is received is mapped to the transport channel. The MAC layer at the time of the connection with the base station apparatus acquires a logical channel number of each RB, a priority of the logical channel, and information of the PBR from the RRC layer.

The MAC layer has a function of notifying of the data amount of a transmission buffer corresponding to each logical channel. This function is called a buffer status report (BSR). In the BSR, each logical channel is assigned to the logical channel group (LCG), and a transmission buffer amount for each LCG is notified to the base station apparatus, a message of the MAC layer.

There are some conditions in which the BSR is triggered. For example, the BSR trigger condition is satisfied in a case where data capable of being transmitted is generated and the data has a priority of the logical channel higher than that of data present in the transmission buffer. The BSR trigger condition is satisfied in a case where one regular timer is satisfied. As the BSR, there are a short BSR of reporting a buffer state of one logical channel group and a long BSR of reporting a buffer state of a plurality of logical channel groups.

In a case where the radio resource (the physical uplink shared channel PUSCH) for notifying of the BSR in a case where the BSR trigger condition is satisfied is not assigned, the MAC layer instructs that the scheduling request (SR) is to be transmitted to the PHY layer. The MAC layer transmits the BSR after the radio resources are assigned. In a case where the transmission of the scheduling request is instructed from the MAC layer, the PHY layer transmits the scheduling request by using the physical uplink control channel PUCCH. In a case where the physical uplink control channel PUCCH for transmitting the scheduling request is not assigned, the PHY layer performs the scheduling request by using the physical random access channel PRACH.

In the 3GPP, Advanced-EUTRA which is further evolution of EUTRA has been discussed. In the Advanced-EUTRA, it is assumed that communication is performed at a maximum transmission rate of 1 Gbps or more in the downlink and at a transmission rate of 500 Mbps or more in the uplink by using a band up to a maximum bandwidth of 100 MHz in the uplink and the downlink.

In the Advanced-EUTRA, it is considered that a maximum bandwidth of 100 MHz is achieved by binding a plurality of bands of 20 MHz or less in the EUTRA such that the mobile station apparatus of the EUTRA can be accommodated. In the Advanced-EUTRA, one band of 20 MHz or less in the EUTRA is called a component carrier (CC). One cell is constructed by binding one downlink component carrier and one uplink component carrier. One cell may be constructed by only one downlink component carrier.

The base station apparatus assigns a plurality of cells satisfying the communication capability and communication condition of the mobile station apparatus, and communicates with the mobile station apparatus through the plurality of assigned cells. Among the plurality of cells assigned to the mobile station apparatus, one cell is classified as a first cell (primary cell: PCell), and other cells are classified as second cells (secondary cell: SCell). A special function such as the assignment of the physical uplink control channel PUCCH is configured for the first cell.

In order to reduce the power consumption of the mobile station apparatus, the mobile station apparatus does not perform a downlink reception process on the immediately assigned second cells (or does not follow radio resource assignment information indicated by the physical downlink control channel PDCCH), and the mobile station apparatus starts the downlink reception process on the second cells instructed to be activated (or follows the radio resource assignment information indicated by the physical downlink control channel PDCCH) after the activate or the activation is instructed from the base station apparatus.

After the deactivate or the deactivation of the activated second cells is instructed from the base station apparatus, the mobile station apparatus stops the downlink reception process on the second cells instructed to be deactivated (or does not follow the radio resource assignment information indicated by the physical downlink control channel PDCCH). The second cells which are instructed to be activated from the base station apparatus and on which the downlink reception process is performed are referred to as activated cells, and the second cells immediately assigned to the mobile station apparatus from the base station apparatus and the second cells which are instructed to be deactivated and on which the downlink reception process is stopped are referred to as deactivated cells. The first cell is constantly an activated cell.

In a case where the carrier aggregation is operated, the MAC layer of the mobile station apparatus has a function of controlling the PHY layer in order to perform the activation/deactivation of the cell and a function of controlling the PHY layer in order to manage the uplink transmission timing.

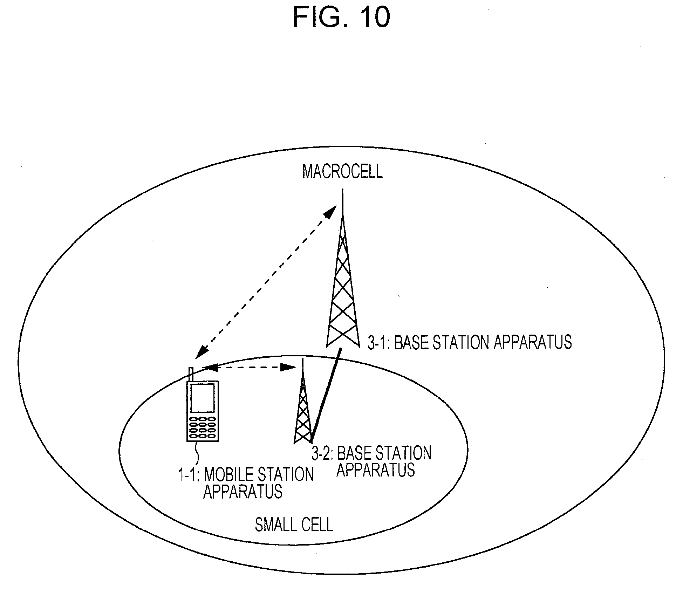

It has been examined that the mobile station apparatus is simultaneously connected to both the base station apparatuses, as dual connect with two base station apparatuses, as shown in Fig. 10. The dual connect assumes that the mobile station apparatus is connected to the base station apparatus as the macrocell and the base station apparatus as the small cell and the mobile station apparatus and both the base station apparatuses perform the transmission and reception of data through the plurality of cells in a case where the base station apparatus as a macrocell and the base station apparatus as a small cell are connected using not a high-speed backbone line (referred to as backhaul) such as an optical fiber regarded as having no delay but a low-speed backbone line having delay (NPL 2).

Similarly to the carrier aggregation, in the dual connect, the communication is preferably performed between the mobile station apparatus and the base station apparatus by using the macrocell as the first cell (PCell) and the small cell as the second cell (SCell). However, the dual connect may be set irrespective of the type (macrocell or the small cell) of the cell of the base station apparatus. In the dual connect, it is assumed that the transmission and reception of control data (control information) is performed between the base station apparatus as the macrocell and the mobile station apparatus and the transmission and reception of user data (user information) is performed between the base station apparatus as the small cell and the mobile station apparatus. It is considered that the base station apparatus that transmits and receives data is changed based on the type of data (for example, QoS or logical channel) which is more detailed than the control data and the user data. Similarly the carrier aggregation, it is also considered that the activation/deactivation of the cell is performed.

In a case where one or both of a transmission timing for each uplink component carrier to the base station apparatus and a reception timing for each downlink component carrier in the mobile station apparatus are different for each cell due to the deployment of the base station apparatuses, the communication is performed by grouping cells in which the uplink transmission timings are the same. The cells in which the transmission timings are the same being grouped is referred to as a transmission timing group (timing advance group). The MAC layer of the mobile station apparatus has a function of controlling the PHY layer in order to manage the transmission timing group.

### (Embodiment)

### [Structure Description]

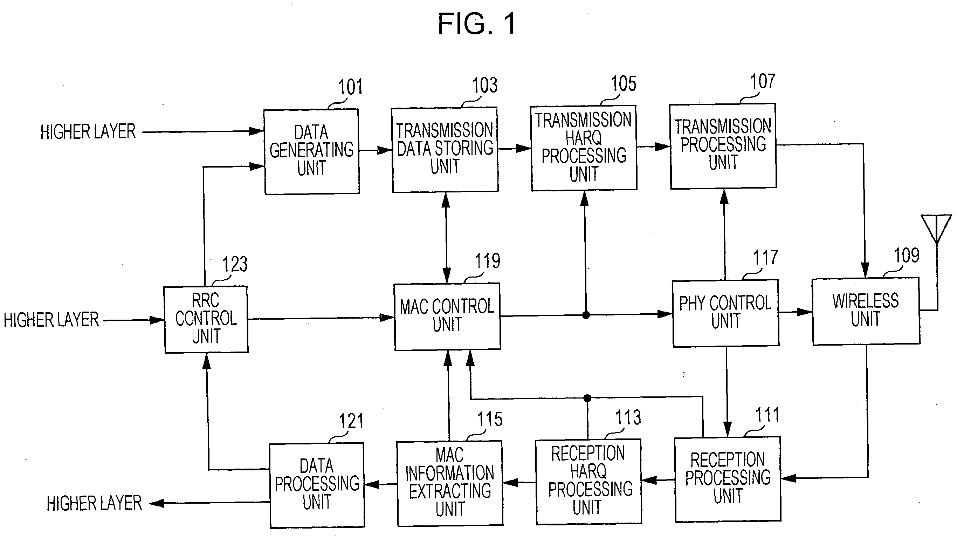

Fig. 1 is a diagram showing the structure of the mobile station apparatus according to the embodiment of the present invention. Each of the mobile station apparatuses 1-1 to 1-3 includes a data generating unit 101, a transmission data storing unit 103, a transmission HARQ processing unit 105, a transmission processing unit 107, a wireless unit 109, a reception processing unit 111, a reception HARQ processing unit 113, a MAC information extracting unit 115, a PHY control unit 117, a MAC control unit 119, a data processing unit 121, and an RRC control unit 123.

The user data from the higher layer and the control data from the RRC control unit 123 are input to the data generating unit 101. The data generating unit 101 has functions of the PDCP layer and the RLC layer. The data generating unit 101 performs the header compression of the IP packet of the user data, the ciphering of data, and processes such as the segmentation and concatenation of data, and controls the data size. The data generating unit 101 outputs the processed data to the transmission data storing unit 103.

The transmission data storing unit 103 stores the data of each logical channel input from the data generating unit 101, and outputs as much instructed data as the data amount instructed based on an instruction from the MAC control unit 119, to the transmission HARQ processing unit 105. The transmission data storing unit 103 outputs information of the data amount of the stored data to the MAC control unit 119 based on the instruction from the MAC control unit 119.

The transmission data storing unit 103 notifies the MAC control unit 119 that new data is generated in a case where the data of the logical channel is newly input from the data generating unit 101 in a state in which the data of the logical channel is not present. The transmission data storing unit 103 notifies the MAC control unit 119 that data having a high priority is generated in a case where data of a logical channel having a priority higher than that of the logical channel of the stored data is input from the data generating unit 101.

The transmission HARQ processing unit 105 codes the input data, and performs a puncturing process on the coded data. The transmission HARQ processing unit 105 outputs the punctured data to the transmission processing unit 107, and holds the coded data. In a case where the retransmission of the data is instructed from the MAC control unit 119, the transmission HARQ processing unit 105 performs a puncturing process different from the puncturing process performed in the previous stage on the coded data which is held, and outputs the punctured data to the transmission processing unit 107.

The transmission processing unit 107 modulates and codes the data input from the transmission HARQ processing unit 105. The transmission processing unit 107 performs DFT (discrete Fourier transform) - IFFT (inverse fast Fourier transform) on the demodulated and coded data, inserts a CP (cyclic prefix) into the processed data, sets the data into which the CP has been inserted in the physical uplink shared channel PUSCH of each uplink component carrier (cell), and outputs the data to the wireless unit 109.

In a case where the response of the reception data is instructed from the PHY control unit 117, the transmission processing unit 107 generates an ACK signal or NACK signal, sets the generated signal in the physical uplink control channel PUCCH of each component carrier (cell) of the uplink, and outputs the signal to the wireless unit 109. In a case where the transmission of the scheduling request is instructed from the PHY control unit 117, the transmission processing unit 107 generates a scheduling request signal, sets the generated signal in the physical uplink control channel PUCCH of each component carrier (cell) of the uplink, and outputs the signal to the wireless unit 109. In a case where the transmission of the random access preamble is instructed from the PHY control unit 117, the transmission processing unit 107 generates a random access preamble, sets the generated signal in the physical random access channel PRACH, and outputs the signal to the wireless unit 109.

The wireless unit 109 performs up-conversion on the data input from the transmission processing unit 107 so as to have a wireless frequency of transmission position information (transmission cell information) instructed from the PHY control unit 117, and adjusts transmission power to transmit the data through a transmission antenna. The wireless unit 109 performs down-conversion on a radio signal received by a reception antenna, and outputs the converted signal to the reception processing unit 111.

The reception processing unit 111 performs the FFT (fast Fourier transform) process, the deciphering process, and the demodulation process on the signal input from the wireless unit 109. The reception processing unit 111 outputs the data of the physical downlink shared channel PDSCH of the demodulated data to the reception HARQ processing unit 113. The reception processing unit 111 outputs the uplink transmission permission information (uplink grant) and the response information (ACK/NACK) of the uplink transmission data of the control data acquired from the physical downlink control channel PDCCH of the demodulated data to the MAC control unit 119. The uplink transmission permission information includes modulation and coding schemes, data size information, HARQ information and transmission position information.

The reception HARQ processing unit 113 performs the deciphering process on the input data from the reception processing unit 111, and outputs the data to the MAC information extracting unit 115 in a case where the deciphering process succeeds. The reception HARQ processing unit 113 stores data on which the deciphering process fails in a case where the deciphering process fails on the input data. In a case where the retransmission data is received, the reception HARQ processing unit 113 combines the held data with the retransmission data, and performs the deciphering process. The reception HARQ processing unit 113 notifies the MAC control unit 119 of whether or not the deciphering process has succeeded on the input data.

The MAC information extracting unit 115 extracts the control data of the MAC layer (medium access control layer) from the data input from the reception HARQ processing unit 113, and outputs the extracted control information to the MAC control unit 119. The MAC information extracting unit 115 outputs remaining data to the data processing unit 121. The data processing unit 121 has functions of the PDCP layer and the RLC layer, and performs a function of decompressing (restoring) the compressed IP header, a function of deciphering the ciphered data and processes such as the segmentation and concatenation of data. The data processing unit 121 divides the data into the RRC message and the user data, outputs the RRC message to the RRC control unit 123, and outputs the user data to the higher layer.

The PHY control unit 117 controls the transmission processing unit 107, the wireless unit 109 and the reception processing unit 111 in response to the instruction from the MAC control unit 119. The PHY control unit 117 notifies the transmission processing unit 107 of the modulation and coding schemes and the transmission position from the modulation and coding schemes, the transmission information and the transmission position information (transmission cell information) notified from the MAC control unit 119, and notifies the wireless unit 109 of transmission power information and frequency information of the transmission cell.

The MAC control unit 119 determines a data transmission destination and a data transmission priority based on data control configuration designated from the RRC control unit 123 and data amount information acquired from the transmission data storing unit 103 and uplink transmission permission information acquired from the reception processing unit 111, and notifies the transmission data storing unit 103 of information regarding the data to be transmitted. The MAC control unit 119 notifies the transmission HARQ processing unit 105 of HARQ information, and outputs modulation and cording schemes and transmission position information (transmission cell information) to the PHY control unit 117.

In a case where the change of a data storing state is notified from the transmission data storing unit 103, the MAC control unit 119 triggers the buffer status report. In a case where the uplink transmission permission information is acquired from the reception processing unit 111, the MAC control unit 119 starts or restarts the retransmission timer and the periodic timer. In a case where the retransmission timer expires and data of each logical channel remains in the transmission data storing unit 103, the MAC control unit 119 triggers the buffer status report. In a case where the periodic timer expires, the MAC control unit 119 triggers the buffer status report.

If the uplink transmission permission information is acquired from the reception processing unit 111 in a state in which the buffer status report is triggered, the MAC control unit 119 instructs the transmission data storing unit 103 to report the data storing amount of each logical channel. If information of the data storing amount of each logical channel is acquired from the transmission data storing unit 103, the MAC control unit 119 creates the buffer status report, and outputs the created buffer status report to the transmission data storing unit 103.

In a case where the uplink transmission permission information is not acquired in a state in which the buffer status report is triggered, the MAC control unit 119 determines to transmit the scheduling request, and instructs the PHY control unit 117 to transmit the scheduling request. In a case where the uplink transmission permission information for the scheduling request is acquired, the MAC control unit 119 creates the buffer status report, and outputs the created buffer status report to the transmission data storing unit 103.

In a case where the transmission number of times of the scheduling request is counted and the uplink transmission permission information is not acquired even though the transmission number of times of the scheduling request reaches the maximum transmission number of times, the MAC control unit 119 instructs the PHY control unit 117 to transmit the random access preamble. The MAC control unit 119 notifies the RRC control unit 123 of the release of the uplink radio resource assigned to the mobile station apparatus.

The MAC control unit 119 acquires response information to the uplink transmission data from the reception processing unit 111, and instructs the transmission HARQ processing unit 105 and the PHY control unit 117 to perform the retransmission in a case where the response information indicates NACK (negative acknowledge). In a case where information of whether or not the deciphering process has succeeded on the data from the reception HARQ processing unit 113, the MAC control unit 119 instructs the PHY control unit 117 to transmit an ACK signal or a NACK signal.

The MAC control unit 119 has a function of the MAC layer, and instructs the PHY control unit 117 to control the wireless unit 109, the transmission processing unit 107 and the reception processing unit 111 in order to perform the activation/deactivation control and DRX control in a case where the discontinuous reception (DRX) control information and the activation/deactivation instruction information of the cell (or component carrier) of the MAC control information input from the MAC information extracting unit 115 are acquired.

The MAC control unit 119 manages the validation and invalidation of the uplink transmission timing by using the transmission timing timer. The MAC control unit 119 includes the transmission timing timer for each cell or each transmission timing group, and starts or restarts a corresponding transmission timing timer in a case where the transmission timing information is applied to each cell or each transmission timing group. In a case where the transmission timing timer expires, the MAC control unit 119 stops the uplink transmission with respect to the cell in which the transmission timing timer expires.

The MAC control unit 119 outputs the transmission timing information of the MAC control information input from the MAC information extracting unit 115 to the PHY control unit 117. The MAC control unit 119 manages the uplink transmission timing, and controls the PHY control unit 117.

The RRC control unit 123 performs RRC connection and disconnection with respect to the base station apparatus 3-1, and various configurations for communicating with the base station apparatus 3-1 and the base station apparatus 3-2 such as carrier aggregation configuration, and data control configuration of the control data and the user data. The RRC control unit 123 transmits and receives information to and from the higher layer according to the various configurations, and controls the lower layer according to the various configurations. The RRC control unit 123 manages the radio resource of each cell assigned from the base station apparatus 3-1.

The RRC control unit 123 creates the RRC message, and outputs the created RRC message to the data generating unit 101. The RRC control unit 123 analyzes the RRC message input from the data processing unit 121. The RRC control unit 123 outputs information necessary for the MAC layer to the MAC control unit 119, and outputs information necessary for the physical layer to the PHY control unit 117.

In a case where data control configuration information such as a logical channel of each data, a priority of a logical channel of each data, information indicating the association between a logical channel group and a logical channel of each control data, associated information between the logical channel and the base station apparatus (or the cell or the cell group), the retransmission timer and the periodic timer is acquired, the RRC control unit 123 outputs data transmission control configuration information to the MAC control unit 119. In a case where it is recognized that the mobile station apparatus communicates with the base station apparatus 3-1 and the base station apparatus 3-2 through the dual connect, the RRC control unit 123 notifies the MAC control unit 119 of a dual connect state.

In a case where the releasing of the uplink radio resource is notified from the MAC layer, the RRC control unit 123 releases the uplink radio resource such as the uplink reference signal and the physical uplink control channel PUCCH assigned to the cell as a target.

The transmission processing unit 107, the wireless unit 109, the reception processing unit 111 and the PHY control unit 117 perform the operation of the physical layer, the transmission data storing unit 103, the transmission HARQ processing unit 105, the reception HARQ processing unit 113, the MAC information extracting unit 115 and the MAC control unit 119 perform the operation of the MAC layer, the data generating unit 101 and the data processing unit 121 perform the operations of the RLC layer and the PDCP layer, and the RRC control unit 123 performs the operation of the RRC layer.

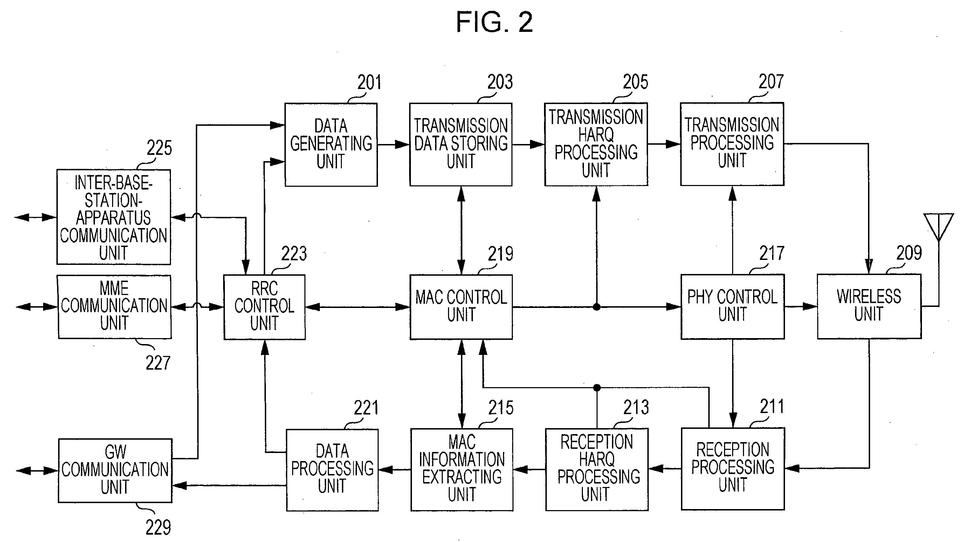

Fig. 2 is a diagram showing the structure of the base station apparatus according to the embodiment of the present invention. The base station apparatus 3-1 or the base station apparatus 3-2 includes a data generating unit 201, a transmission data storing unit 203, a transmission HARQ processing unit 205, a transmission processing unit 207, a wireless unit 209, a reception processing unit 211, a reception HARQ processing unit 213, a MAC information extracting unit 215, a PHY control unit 217, an MAC control unit 219, a data processing unit 221, an RRC control unit 223, an inter-base-station-apparatus communication unit 225, an MME communication unit 227, and a GW communication unit 229.

The user data from the GW communication unit 229 and the control data from the RRC control unit 223 are input to the data generating unit 201. The data generating unit 201 has functions of the PDCP layer and the RLC layer, compresses the header of the IP packet of the user data and ciphers the data, perform processes such as the segmentation and concatenation of the data, and adjusts the data size. The data generating unit 201 outputs the processed data and the logical channel information of the data to the transmission data storing unit 203.

The transmission data storing unit 203 stores the data input from the data generating unit 201 for each user, and outputs as much the data of the user instructed based on the instruction from the MAC control unit 219 as the instructed data amount to the transmission HARQ processing unit 205. The transmission data storing unit 203 outputs information of the data amount of the stored data to the MAC control unit 219.

The transmission HARQ processing unit 205 codes the input data, and performs a puncturing process on the coded data. The transmission HARQ processing unit 205 outputs the punctured data to the transmission processing unit 207, and holds the coded data. In a case where the retransmission of the data is instructed from the MAC control unit 219, the transmission HARQ processing unit 205 performs a puncturing process different from the puncturing process performed in the previous stage on the coded data being held, and outputs the punctured data to the transmission processing unit 207.

The transmission processing unit 207 modulates and codes the data input from the transmission HARQ processing unit 205. The transmission processing unit 207 maps the modulated and coded data to each channel and signal such as the physical downlink control channel PDCCH, downlink synchronization signal, the physical broadcast channel PBCH and the physical downlink shared channel PDSCH of each cell, performs serial/parallel conversion, IFFT (inverse fast Fourier transform) and OFDM signal processing such as CP insertion on the mapped data, and generates OFDM signals.

The transmission processing unit 207 outputs the generated OFDM signals to the wireless unit 209. In a case where the response of the reception data is instructed from the MAC control unit 219, the transmission processing unit 207 generates the ACK or NACK signal, sets the generated signal in the physical downlink control channel PDCCH, and outputs the signal to the wireless unit 209. The transmission processing unit 207 sets the uplink transmission permission information notified from the PHY control unit 217 in the physical downlink control channel PDCCH, and outputs the signal to the wireless unit 209.

The wireless unit 209 performs up-conversion on the data input from the transmission processing unit 207 to have a wireless frequency, and adjusts transmission power to transmit the data from a transmission antenna. The wireless unit 209 performs down-conversion on the radio signal received by a reception antenna, and outputs the signal to the reception processing unit 211. The reception processing unit 211 performs an FFT (fast Fourier transform) process, a deciphering process and a demodulation process son the signal input from the wireless unit 209.

The reception processing unit 211 outputs the data of the physical uplink shared channel PUSCH of the demodulated data to the reception HARQ processing unit 213. The reception processing unit 211 outputs response information (ACK/NACK), downlink radio channel quality information (CQI) and uplink transmission request information (scheduling request) of the downlink transmission data of the control data acquired from the physical uplink control channel PUCCH of the demodulated data to the MAC control unit 219.

The reception HARQ processing unit 213 performs the deciphering process on the input data from the reception processing unit 211, and outputs the data to the MAC information extracting unit 215 in a case where the deciphering process succeeds. In a case where the deciphering process fails on the input data, the reception HARQ processing unit 213 holds the data on which the deciphering process fails. In a case where the retransmission data is received, the reception HARQ processing unit 213 combines the held data with the retransmission data, and performs the deciphering process. The reception HARQ processing unit 213 notifies the MAC control unit 219 of whether or not the deciphering process has succeeded on the input data.

The MAC information extracting unit 215 extracts the control data of the MAC layer from the data input from the reception HARQ processing unit 213, and outputs the extracted control information to the MAC control unit 219. The MAC information extracting unit 215 outputs the remaining data to the data processing unit 221. As the control data of the MAC layer, there is the buffer status report. The data processing unit 221 has functions of the PDCP layer and the RLC layer, and performs a function of decompressing (restoring) the compressed IP header or a deciphering function of the ciphered data and processes such as the segmentation and concatenation of the data. The data processing unit 221 divides the data into the RRC message and the user data, outputs the RRC message to the RRC control unit 223, and outputs the user data to the higher layer.

The PHY control unit 217 controls the transmission processing unit 207, the wireless unit 209 and the reception processing unit 211 in response to the instruction from the MAC control unit 219. The PHY control unit 217 creates the uplink transmission permission information from the scheduling result of the uplink notified from the MAC control unit 219, and notifies the transmission processing unit 207 of the created information.

The MAC control unit 219 has the function of the MAC layer, and controls the MAC layer based on the information acquired from the RRC control unit 223 or the higher layer. The MAC control unit 219 performs the scheduling process of the data transmitted in the downlink and the uplink. The MAC control unit 219 performs the scheduling process of the downlink data from the data amount information for each user acquired from the transmission data storing unit 203, and downlink radio quality information (CQI) and response information (ACK/NACK) of the downlink transmission data input from the reception processing unit 211. The MAC control unit 219 controls the transmission data storing unit 203, the transmission HARQ processing unit 205 and the transmission processing unit 207 based on the result of the scheduling process.

The MAC control unit 219 performs the scheduling process of the uplink data from the buffer status report input from the MAC information extracting unit 215 and the uplink transmission request information (scheduling request) input from the reception processing unlit 211. The MAC control unit 219 notifies the PHY control unit 217 of the result of the scheduling process.

The MAC control unit 219 acquires the response information to the uplink transmission data from the reception processing unit 211, and instructs the transmission HARQ processing unit 205 and the transmission processing unit 207 to perform retransmission in a case where the response information indicates the NACK (negative acknowledge). In a case where the information about whether or not the deciphering process of the data succeeds is acquired from the reception HARQ processing unit 213, the MAC control unit 219 instructs the transmission processing unit 207 to transmit the ACK or NACK signal.

The MAC control unit 219 performs the activation/deactivation process of the cell (or the component carrier) assigned to the mobile station apparatus 1-1. The MAC control unit 219 manages the transmission timing group and the uplink transmission timing of the transmission timing group.

The RRC control unit 223 performs the RRC connection and disconnection processes with respect to the mobile station apparatus 1-1, and various configurations for communicating with the mobile station apparatus 1-1 such as the carrier aggregation configuration, and the data control configuration indicating the cell in which the user data and the control data of the mobile station apparatus 1-1 are transmitted and received, transmits and receives information to and from the higher layer according to the various configurations, and controls the lower layer according to the various configurations.

The RRC control unit 223 creates various RRC messages, and outputs the created RRC messages to the data generating unit 201. The RRC control unit 223 analyzes the RRC message input from the data processing unit 221. The RRC control unit 223 outputs information necessary for the MAC layer to the MAC control unit 219, and outputs information necessary for the physical layer to the PHY control unit 217. In a case where the handover or the dual connect is operated, the RRC control unit 223 notifies the inter-base-station-apparatus communication unit 225 and the MME communication unit 227 of the necessary information

The inter-base-station-apparatus communication unit 225 is connected to another base station apparatus, and transmits a control message between the base station apparatuses, which is input from the RRC control unit 223, to another base station apparatus. The inter-base-station-apparatus communication unit 225 receives the control message between the base station apparatuses from another base station apparatus, and outputs the received control message to the RRC control unit 223. The control message between the base station apparatuses includes a message related to the handover, a control message related to the connection and disconnection of the dual connect, and a control message related to the data control of the mobile station apparatus 1-1.

The MME communication unit 227 is connected to an MME (mobility management entity), and transmits a control message between the base station apparatus and the MME, which is input from the RRC control unit 223, to the MME. The MME communication unit 227 receives the control message between the base station apparatus and the MME from the MME, and outputs the received control message to the RRC control unit 223. The control message between the base station apparatus and the MME includes a path switch request message and a path switch request response message.

The GW communication unit 229 is connected to the GW (gateway), receives the user data of the mobile station apparatus which is sent from the GW, and outputs the received data to the data generating unit 201. The GW communication unit 229 transmits the user data of the mobile station apparatus which is input from the data processing unit 221 to the GW.

The transmission processing unit 207, the wireless unit 209 and the reception processing unit 211 perform the operation of the PHY layer, the transmission data storing unit 203, the transmission HARQ processing unit 205, the reception HARQ processing unit 213, the MAC information extracting unit 215 and the MAC control unit 219 perform the operation of the MAC layer, the data generating unit 201 and the data processing unit 221 perform the operations of the RLC layer and the PDCP layer, and the RRC control unit 223 performs the operation of the RRC layer.

### [Operation Description]

The wireless communication system described with reference to Figs. 5 to 10 is assumed. As shown in Fig. 5, the base station apparatus 3-1 communicates with the plurality of mobile station apparatuses 1-1, 1-2 and 1-3. The wireless communication system in which the base station apparatus 3-1 as the macrocell and the base station apparatus 3-2 as the small cell communicate with the mobile station apparatus 1-1 through the plurality of cells shown in Fig. 10 is assumed.

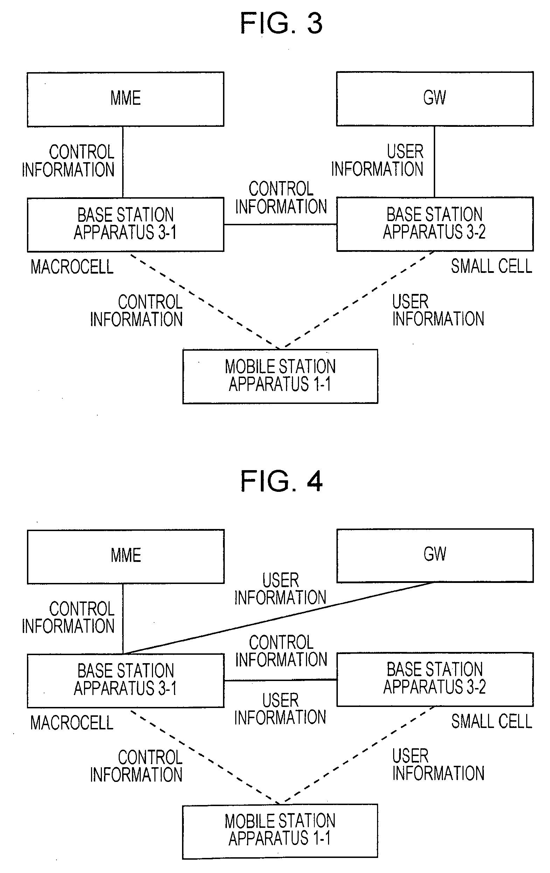

The mobile station apparatus 1-1 shown in Figs. 3 and 4 is connected to the base station apparatus 3-1 and the base station apparatus 3-2 through the dual connect. The control information is transmitted and received between the base station apparatus 3-1 as the macrocell and the mobile station apparatus 1-1. The user information is transmitted and received between the base station apparatus 3-2 as the small cell and the mobile station apparatus 1-1.

In the dual connect shown in Fig. 3, at least the control information (control-plane information) of the mobile station apparatus 1-1 is transmitted and received between the base station apparatus 3-1 as the macrocell and the MME (mobility management entity). At least the user information (user-plane information) of the mobile station apparatus 1-1 is transmitted and received between the base station apparatus 3-2 as the small cell and the GW (gateway). The control information for controlling the mobile station apparatus 1-1 is transmitted and received between the base station apparatus 3-1 as the macrocell and the base station apparatus 3-2 as the small cell.

In the dual connect shown in Fig. 4, at least the control information (control-plane information) of the mobile station apparatus 1-1 is transmitted and received between the base station apparatus 3-1 as the macrocell and the MME (mobility management entity). At least the user information (user-plane information) of the mobile station apparatus 1-1 is transmitted and received between the base station apparatus 3-1 as the macrocell and the GW (gateway). The base station apparatus 3-1 as the macrocell transports the user information received from the GW to the base station apparatus 3-2 as the small cell. The base station apparatus 3-2 as the small cell transports the user information received from the mobile station apparatus 1-1 to the base station apparatus 3-1. The control information for controlling the mobile station apparatus 1-1 is transmitted and received between the base station apparatus 3-1 as the macrocell and the base station apparatus 3-2 as the small cell.

Hereinafter, the operations of the base station apparatuses and the mobile station apparatus on the assumption that the base station apparatus 3-1 is connected to the mobile station apparatus 1-1 through the cell 1 and the cell 2 and the base station apparatus 3-2 is connected to the mobile station apparatus 1-1 through the cell 3 and the cell 4 will be described. The cell 1 and the cell 2 may be a transmission timing group 1 (or a cell group 1), and the cell 3 and the cell 4 may be a transmission timing group 2 (or a cell group 2).

The base station apparatus 3-1 notifies the mobile station apparatus 1-1 of a logical channel of each control data, a priority of a logical channel of each control data, and data control information indicating the association between the logical channel group (LCG) and the logical channel of each control data. The base station apparatus 3-2 notifies the mobile station apparatus 1-1 of a logical channel of each user data, a priority of a logical channel of each user data, and information indicating the association between the logical channel group and the logical channel of each user data. The base station apparatus 3-1 notifies the mobile station apparatus 1-1 of retransmission timer 1 information (first retransmission timer information) and periodic timer 1 information (first periodic timer information) which are timers used to notify of the buffer status report. The base station apparatus 3-2 notifies the mobile station apparatus 1-1 of retransmission timer 2 information (second retransmission timer information) and periodic timer 2 information (second periodic timer information).

For example, the base station apparatus 3-1 configures a corresponding logical channel 1 to control data 1, and configures the logical channel 1 to a logical channel group 1. The base station apparatus 3-1 configures a corresponding logical channel 2 to control data 2, and configures the logical channel 2 to a logical channel group 2. The base station apparatus 3-2 configures a corresponding logical channel 3 to user data 1, and configures the logical channel 3 to a logical channel group 3. The base station apparatus 3-2 configures a corresponding logical channel 4 to user data 2, and configures the logical channel 4 to a logical channel group 3. It is assumed that the base station apparatus 3-1 configures such that a priority of the logical channel 1 is higher than a priority of the logical channel 2 and the base station apparatus 3-2 configures such that a priority of the logical channel 3 is higher than a priority of the logical channel 4.

The information items notified from the base station apparatus 3-1 and the base station apparatus 3-2 may be collected by any one of the base station apparatuses, and may be notified to the mobile station apparatus 1-1. In addition to the information items, the base station apparatus 3-1 or the base station apparatus 3-2 adds associated information between the base station apparatus (or the cell or the cell group) and the logical channel indicating which base station apparatus (or which cell) transmits the data of which logical channel, and notifies the mobile station apparatus 1-1 of the added information

In a case where a timer value of the retransmission timer 1 and a timer value of the retransmission timer 2 are equal to each other and a timer value of the periodic timer 1 and a timer value of the periodic timer 2 are equal to each other, the base station apparatus 3-1 or the base station apparatus 3-2 may notify of one retransmission timer value and one periodic transmission timer value.

For example, the base station apparatus 3-1 or the base station apparatus 3-2 notifies the mobile station apparatus 1-1 of information indicating that the data of the logical channel 1 and the logical channel 2 (or the logical channel group 1 and the logical channel group 2) is transmitted in the cell 1 or the cell 2 and the data of the logical channel 3 (or the logical channel group 3) is transmitted in the cell 3 or the cell 4.

If the information is received from the base station apparatus 3-1 and the base station apparatus 3-2, the mobile station apparatus 1-1 performs the configuration for transmitting the data of the logical channel 1 and the logical channel 2 (or the logical channel group 1 and the logical channel group 2) in the cell 1 or the cell 2 (or the base station apparatus 3-1) and transmitting the data of the logical channel 3 and the logical channel 4 (or the logical channel group 3) in the cell 3 and the cell 4 (or the base station apparatus 3-2).

In a case where the mobile station apparatus 1-1 recognizes that the associated information between the base station apparatus and the logical channel is not present and the mobile station apparatus is in the ducal connect state, the mobile station apparatus 1-1 may perform the data transmission control configuration in consideration of the cell (or the base station apparatus) receiving the data control information.

In the dual connect shown in Fig. 3, each of the base station apparatuses notifies the other base station apparatus of the timer information used to notify of the logical channel of each data, the priority of the logical channel of each data, the data control information indicating the association between the logical channel group (LCG) and the logical channel of each data and the buffer status report.

In the dual connect shown in Fig. 4, the base station apparatus 3-1 notifies the base station apparatus 3-2 of the logical channel of the user data transmitted and received between the base station apparatus 3-2 and the mobile station apparatus 1-1, the priority of the logical channel of the user data, and the data control information indicating the association between the logical channel group and the logical channel of the user data. The base station apparatus 3-2 notifies the base station apparatus 3-1 of the timer information used to notify of the buffer status report. The base station apparatus 3-1 may notify the base station apparatus 3-2 of the timer information used to notify of the buffer status report.

The condition in which the mobile station apparatus 1-1 triggers the buffer status report will be described below. In a case where data of the logical channel (or the logical channel group) is newly generated in a state in which the uplink buffer of each logical channel (or the logical channel group) corresponding to each base station apparatus (or the cell group) in the mobile station apparatus 1-1 is in an empty state, the mobile station apparatus 1-1 triggers the buffer status report for the base station apparatus (or the cell group) corresponding to the logical channel (or the logical channel group) of the data.

In a case where data is newly generated and the logical channel (or the logical channel group) of the newly generated data has a priority higher than that of the logical channel (or the logical channel group) of the data already present in the uplink buffer in a state in which data is already present in the uplink buffer of a certain logical channel (or the logical channel group) corresponding to the base station apparatus (or the cell group) which is the mobile station apparatus 1-1, the mobile station apparatus 1-1 triggers the buffer status report for the base station apparatus (or the cell group) corresponding to the logical channel (or the logical channel group) of the data. Here, the trigger generated in the aforementioned condition is expressed as a trigger 1 (first trigger).

For example, in a case where data of the logical channel 2 is newly generated in a state in which the uplink buffer corresponding to the logical channel 2 (or the logical channel group 2) and the logical channel 1 (or the logical channel group 1) in the mobile station apparatus 1-1 is in an empty state, the mobile station apparatus 1-1 triggers the buffer status report for the base station apparatus 3-1 to which the data of the logical channel 2 is to be transmitted. In this case, the mobile station apparatus 1-1 does not trigger the buffer status report for the base station apparatus 3-2.

In a case where data of the logical channel 3 in the mobile station apparatus 1-1 is generated in a state in which data of the logical channel 4 is present in the uplink buffer of the logical channel 3 (or the logical channel group 3) and the logical channel 4 (or the logical channel group 3), since a priority of the data of the logical channel 3 is higher than a priority of the data of the logical channel 4, the mobile station apparatus 1-1 triggers the buffer status report for the base station apparatus 3-2. In this case, the mobile station apparatus 1-1 does not trigger the buffer status report for the base station apparatus 3-1.

In a case where the retransmission timer corresponding to each base station apparatus expires and the data of the logical channel (or the logical channel group) remains in the uplink buffer corresponding to the base station apparatus, the mobile station apparatus 1-1 triggers the buffer status report for the base station apparatus (or the cell group) corresponding to the logical channel (or the logical channel group) of the data. In a case where the resource of the uplink that is not used in the retransmission is assigned to the mobile station apparatus 1-1 from each base station apparatus, the retransmission timer is started or restarted. The trigger generated in the aforementioned condition is expressed as a trigger 2 (second trigger).

For example, in a case where the data of the logical channel 3 is present in the uplink buffer at the time of the expiration of the retransmission timer 2, the mobile station apparatus 1-1 triggers the buffer status report for the base station apparatus 3-2. In a case where the data of the logical channel 1 is present in the uplink buffer at the time of the expiration of the retransmission timer 2, the mobile station apparatus 1-1 does not trigger the buffer status report for the base station apparatus 3-2.

In a case where the periodic timer expires, the mobile station apparatus 1-1 triggers the buffer status report for the base station apparatus corresponding to the periodic timer. For example, in a case where the periodic timer 1 expires, the mobile station apparatus 1-1 triggers the buffer status report for the base station apparatus 3-1. In a case where the periodic timer 2 expires, the mobile station apparatus 1-1 triggers the buffer status report for the base station apparatus 3-2. The trigger generated in the aforementioned condition is expressed as a trigger 3 (third trigger).

In a case where the resource of the uplink that is not used in the retransmission is assigned to the mobile station apparatus 1-1 from each base station apparatus, the periodic timer is started or restarted. The mobile station apparatus 1-1 may include only one periodic timer with respect to the base station apparatus on which the dual connect is operated. In a case where only one periodic timer is included, the mobile station apparatus 1-1 may trigger the buffer status report for both base station apparatuses in a case where the periodic timer expires. The mobile station apparatus 1-1 may trigger the buffer status report in only the base station apparatus 3-1 as the macrocell.

In a case where the resource of the uplink is assigned from the base station apparatus 3-1 or the base station apparatus 3-2 and the bit number of padding bits is equal to or greater than the bit number of the buffer status report and notification relevant information of the buffer status report, the mobile station apparatus 1-1 triggers the buffer status report for the base station apparatus to which the resource of the uplink is assigned. The trigger generated in the aforementioned condition is expressed as a trigger 4 (fourth trigger).

For example, in a case where the resource of the uplink is assigned from the base station apparatus 3-1 and the bit number of padding bits is equal to or greater than the bit number of the buffer status report and notification relevant information of the buffer status report, the mobile station apparatus 1-1 triggers the buffer status report for the base station apparatus 3-1. In this case, the mobile station apparatus 1-1 does not trigger the buffer status report for the base station apparatus 3-2.

In a case where the resource of the uplink that is not used in the retransmission for the base station apparatus corresponding to the triggered buffer status report in a state in which the buffer status report is triggered by any one of the trigger 1 to the trigger 4, the mobile station apparatus 1-1 generates the buffer status report, generates the PUSCH including the buffer status report information and the user data or the control data, and transmits the triggered buffer status report to the corresponding base station apparatus. In a case where the buffer status report information is transmitted, the mobile station apparatus 1-1 cancels all the triggers generated for the base station apparatus that transmits the buffer status report information. The state in which the buffer status report is triggered refers to a state in which at least one buffer status report is triggered and the trigger is not cancelled.

For example, in a case where the resource of the uplink in which the buffer status report information for the base station apparatus 3-2 can be transmitted is assigned in a state in which the buffer status report for the base station apparatus 3-2 is triggered due to the trigger 1 and the trigger 3 and the buffer status report for the base station apparatus 3-1 is triggered due to the trigger 3, the mobile station apparatus 1-1 generates the buffer status report information corresponding to the base station apparatus 3-2, generates the PUSCH including the buffer status report information and the user data, and transmits the generated channel to the base station apparatus 3-2.

The mobile station apparatus 1-1 cancels the trigger 1 and the trigger 3 generated for the base station apparatus 3-2. The trigger 3 for the base station apparatus 3-1 is maintained. The trigger 3 for the base station apparatus 3-1 is cancelled in a case where the resource of the uplink is assigned from the base station apparatus 3-1 and the assigned resource including the buffer status report information corresponding to the base station apparatus 3-1 is transmitted.

In a case where the resource of the uplink that is not used in the retransmission for the base station apparatus corresponding to the triggered buffer status report is not assigned in a state in which the buffer status report is triggered due to the trigger 1 or the trigger 2, the mobile station apparatus 1-1 triggers the scheduling request for the base station apparatus corresponding to the triggered buffer status report.

In a case where the mobile station apparatus 1-1 does not assign the resource of the uplink transmitted to the base station apparatus 3-1 in a state in which the trigger 1 is generated for the base station apparatus 3-1, the mobile station apparatus 1-1 triggers the scheduling request for the base station apparatus 3-1, and perform the scheduling request with respect to the base station apparatus 3-1 by using the uplink control channel PUCCH or the physical random access channel PRACH.

In a case where the mobile station apparatus 1-1 does not have the resource of the uplink transmitted to the base station apparatus 3-2 in a state in which the trigger 2 is generated for the base station apparatus 3-2, the mobile station apparatus 1-1 triggers the scheduling request for the base station apparatus 3-2, and performs the scheduling request with respect to the base station apparatus 3-2 by using the uplink control channel PUCCH or the physical random access channel PRACH.

In the buffer status report due to the trigger 1, the trigger 2 and the trigger 3, in a case where there is valid data in a plurality of logical channel groups at the time of the transmission of the buffer status report, the mobile station apparatus 1-1 transmits the long BSR indicating the buffer states of the plurality of logical channel groups for the base station apparatus corresponding to the triggered buffer status report. In a case where there is valid data in one logical channel group at the time of the transmission of the buffer status report in the buffer status report due to the trigger 1, the trigger 2 and the trigger 3, the mobile station apparatus 1-1 transmits the short BSR indicating the buffer state of one logical channel group for the base station apparatus corresponding to the triggered buffer status repoint.

For example, in a case where there is data capable of being transmitted in the buffers of the logical channel group 1 and the logical channel group 2 in a state in which the buffer status report is triggered for the base station apparatus 3-1, the mobile station apparatus 1-1 transmits the long BSR including at least the buffer states of the logical channel group 1 and the logical channel group 2 to the base station apparatus 3-1. The long BSR may include the buffer amount (or the data amount) of all the logical channel groups indicated by each base station apparatus.

In a case where there is data capable of being transmitted in the buffer of the logical channel group 2 in a state in which the buffer status report is triggered for the base station apparatus 3-1, the mobile station apparatus 1-1 transmits the short BSR indicating the buffer state of the logical channel group 2 to the base station apparatus 3-1. The short BSR includes the buffer amount (or the data amount) of the logical channel group, and the logical channel group information.

In the buffer status report due to the trigger 4, in a case where in the buffer status report due to the trigger 4, the bit number of padding bits at the time of the transmission of the buffer status report is less than the bit number of the notification relevant information of the buffer status report and the long BSR and is equal to or greater than the bit number of the notification relevant information of the buffer status report and the short BSR and there is valid data in the plurality of logical channel groups for the base station apparatus corresponding to the triggered buffer status report, the mobile station apparatus 1-1 transmits the short BSR indicating the buffer state of the logical channel group to which the logical channel having the highest priority belongs.

In a case where the bit number of padding bits at the time of the transmission of the buffer status report is less than the bit number of the notification relevant information of the buffer status report and the long BSR and is equal to or greater than the bit number of the notification relevant information of the buffer status report and the short BSR and there is valid data in one logical channel group for the base station apparatus corresponding to the triggered buffer status report, the mobile station apparatus 1-1 transmits the short BSR indicating the buffer state of the logical channel group.

In a case where the bit number of padding bits at the time of the transmission of the buffer status report is equal to or greater than the bit number of the long BSR, the mobile station apparatus 1-1 transmits the long BSR indicating the buffer state of the logical channel group for the base station apparatus corresponding to the triggered buffer status report.

For example, in the buffer status report due to the trigger 4 for the base station apparatus 3-1, in a case where the bit number of padding bits is less than the bit number of the notification relevant information of the buffer status report and the long BSR and is equal to or greater than the number bit of the notification relevant information of the buffer status report and the short BSR and there is data capable of being transmitted in the buffers of the logical channel group 1 and the logical channel group 2, the mobile station apparatus 1-1 transmits the short BSR indicating the buffer state of the logical channel group 1 to the base station apparatus 3-1.

For example, in the buffer status report due to the trigger 4 for the base station apparatus 3-1, in a case where the bit number of padding bits is less than the bit number of the notification relevant information of the buffer status report and the long BSR and is equal to or greater than the number bit of the notification relevant information of the buffer status report and the short BSR and there is data capable of being transmitted in the buffers of the logical channel group 2, the mobile station apparatus 1-1 transmits the short BSR indicating the buffer state of the logical channel group 2 to the base station apparatus 3-1.

In the buffer status report due to the trigger 3, in a case where there is valid data in the plurality of logical channel groups corresponding to both the base station apparatuses at the time of the transmission of the buffer status report, the mobile station apparatus 1-1 may transmit the long BSR indicating the buffer states of the plurality of logical channel groups corresponding to both the base station apparatuses. In the buffer status report due to the trigger 3, in a case where there is no valid data in the logical channel group corresponding to the base station apparatus corresponding to the triggered buffer status report at the timer of the transmission of the buffer status report and there is valid data in the logical channel group corresponding to the base station apparatus that does not correspond to the triggered buffer status report, the mobile station apparatus 1-1 may transmit the long BSR indicating the buffer states of the plurality of logical channel groups corresponding to both the base station apparatuses.

In the buffer status report due to the trigger 3, in a case where there is valid data in one logical channel group corresponding to the base station apparatus corresponding to the triggered buffer status report at the time of the transmission of the buffer status report and there is no valid data in the logical channel group corresponding to the base station apparatus that does not correspond to the triggered buffer status report, the mobile station apparatus 1-1 may transmit the short BSR indicating the buffer state of one logical channel group corresponding to the base station apparatus corresponding to the triggered buffer status report.

For example, in the buffer status report due to the trigger 3 corresponding to the base station apparatus 3-1, in a case where there is data capable of being transmitted in the logical channel group 1 and the logical channel group 3 at the time of the transmission of the buffer status report, the mobile station apparatus 1-1 transmits the long BSR including at least the buffer states of the logical channel group 1 and the logical channel group 3 to the base station apparatus 3-1.

In the buffer status report due to the trigger 3 corresponding to the base station apparatus 3-2, in a case where there is data capable of being transmitted in the logical channel group 2 and there is no data capable of being transmitted in the logical channel group 3, the mobile station apparatus 1-1 transmits the long BSR including at least the buffer states of the logical channel group 2 and the logical channel group 3 to the base station apparatus 3-2.

In the buffer status report due to the trigger 3 corresponding to the base station apparatus 3-2, in a case where there is no data capable of being transmitted in the logical channel group 1 and the logical channel group 2 and there is data capable of being transmitted in the logical channel group 3, the mobile station apparatus 1-1 transmits the short BSR indicating the buffer state of the logical channel group 3 to the base station apparatus 3-2. By doing this, the base station apparatus can check whether or not the data communication is performed between the other base station apparatus and the mobile station apparatus.

The mobile station apparatus 1-1 may receive a deactivate instruction for the cell of the base station apparatus 3-2 as the small cell in a state in which a trigger of at least one buffer status report is generated for the base station apparatus 3-2 as the small cell, and may cancel the trigger generated for the base station apparatus 3-2 in a case where all the cells of the base station apparatus 3-2 as the small cell are in the deactivated state.

The mobile station apparatus 1-1 may cancel the trigger generated for the base station apparatus 3-2 in a case where the transmission timing timer of the cell (or the transmission timing group) of the base station apparatus 3-2 as the small cell expires in a state in which a trigger of at least one buffer status report is generated for the base station apparatus 3-2 as the small cell.

The mobile station apparatus 1-1 may transmit the scheduling request to the base station apparatus 3-2 as the small cell in a state in which a trigger of at least one buffer status report is generated for the base station apparatus 3-2 as the small cell, and may cancel the trigger generated for the base station apparatus 3-2 in a case where the uplink transmission permission information is not acquired even though the transmission number of times of the scheduling request reaches the maximum transmission number of times.

In a case where the buffer status report for the base station apparatus 3-2 as the small cell as described above is cancelled, the mobile station apparatus 1-1 cancels the trigger generated for the base station apparatus 3-2, and then triggers the buffer status report for the base station apparatus 3-1. In a case where the mobile station apparatus 1-1 has the resource of the uplink transmitted to the base station apparatus 3-1, the mobile station apparatus creates the buffer status report, and transmits the buffer status report to the base station apparatus 3-1.

In a case where the mobile station apparatus 1-1 does not have the resource of the uplink transmitted to the base station apparatus 3-1, the mobile station apparatus 1-1 triggers the scheduling request for the base station apparatus 3-1, and performs the scheduling request with respect to the base station apparatus 3-1 by using the uplink control channel PUCCH or the random access channel RACH.

By doing this, the mobile station apparatus 1-1 can appropriately notify the base station apparatus 3-1 or the base station apparatus 3-2 of the buffer states of the uplink data of the mobile station apparatus 1-1. Since the base station apparatus 3-1 and the base station apparatus 3-2 can appropriately know the buffer state of the mobile station apparatus 1-1, the efficient scheduling is performed.

Although the embodiment of the present invention has been described in detail with reference to the drawings, the specific structure is not limited thereto, but various design changes are possible without departing from the gist of the present invention.

Although it has been described in the embodiment that an example of the terminal apparatus or the communication apparatus is the mobile station apparatus, the present invention is not limited thereto. The present invention can also be applied to terminal apparatuses or communication apparatuses of stationary or non-movable electronic apparatuses which are installed indoors or outdoors, such as AV apparatuses, kitchen apparatuses, cleaning and washing machines, air conditioners, office apparatuses, vending machines, and other home appliances.

For the sake of convenience in description, the mobile station apparatus 1-1, the base station apparatus 3-1 and the base station apparatus 3-2 of the embodiment have been described with reference to the functional block diagrams. However, the mobile station apparatus or the base station apparatus may be controlled by recording programs for realizing the functions of the respective units of the mobile station apparatus 1-1, the base station apparatus 3-1 and the base station apparatus 3-2 and some of the functions thereof on a computer-readable recording medium and causing a computer system to read and execute the program recorded on the recording medium. The term "computer system" means a computer system that includes an OS or hardware such as peripheral apparatuses.

The term "computer-readable recording medium" means a portable medium, such as a flexible disk, a magneto-optical disk, a ROM, or a CD-ROM, or a storing apparatus such as a hard disc provided in the computer system. The "computer-readable recording medium" may include a recording medium that dynamically stores the program in a short period of time, such as a communication cable used in a case where the program is transmitted through a network, such as the Internet, or a communication line, such as a telephone line, and a recording medium that stores the program for a predetermined period of time, such as a volatile memory in a computer system that serves as a server or a client in this case. The "program" may be a program that realizes some of the above-mentioned functions or a program that implements the above-mentioned functions in combination with the program which has been recorded on the computer system.

The functional blocks used in the embodiment may be realized as LSIs which are typical integrated circuits. Each functional block may be individually integrated into a chip, or some or all of the functional blocks may be integrated into a chip. A method for achieving the integrated circuit is not limited to the LSI, but may be realized by a dedicated circuit or a general-purpose processor. In addition, in a case where a technique for achieving an integrated circuit which replaces the LSI technique will be developed with the progress of a semiconductor technique, the integrated circuit manufactured by the developed technique can also be used.

The embodiment of the present invention has been described with reference to the drawings. However, the detailed structure is not limited to the above-described embodiment and the present invention also includes a change in the design within the scope and spirit of the invention.

### Industrial Applicability

The present invention can be applied to a mobile phone, a personal computer, and a tablet computer.

### Reference Signs List

- 1-1 to 1-3: Mobile station apparatus
- 3-1, 3-2: Base station apparatus
- 101, 201: Data generating unit
- 103, 203: Transmission data storing unit
- 105, 205: Transmission HARQ processing unit
- 107, 207: Transmission processing unit
- 109, 209: Wireless unit
- 111, 211: Reception processing unit
- 113, 213: Reception HARQ processing unit
- 115, 215: MAC information extracting unit
- 117, 217: PHY control unit
- 119, 219: MAC control unit
- 121, 221: Data processing unit
- 123, 223: RRC control unit
- 225: Inter-base-station-apparatus communication unit
- 227: MME communication unit
- 229: GW communication unit

## Claims

1. A wireless communication system in which a first base station apparatus and a second base station apparatus communicate with a terminal apparatus,
wherein the first base station apparatus and/or the second base station apparatus notify the terminal apparatus of data control information related to data transmission and reception of the terminal apparatus and timer information used for notification of a buffer status report, and
the terminal apparatus notifies any one of the first base station apparatus and the second base station apparatus of the buffer status report of uplink data based on the data control information in a case where the notification of the buffer status report is triggered.

2. The wireless communication system according to claim 1,
wherein, in a case where data is newly generated in a state in which an uplink buffer of the terminal apparatus is in an empty state, the first base station apparatus or the second base station apparatus corresponding to a logical channel or a logical channel group indicated by the data control information is notified of buffer status information of uplink data.

3. The wireless communication system according to claim 1,
wherein, in a case where a timer notified by the timer information expires and data is present in the uplink buffer, the first base station apparatus or the second base station apparatus corresponding to a logical channel or a logical channel group indicated by the data control information is notified of buffer status information of uplink data.

4. A base station apparatus that is connected to another base station apparatus, and communicates with a terminal apparatus, the base station apparatus being adapted to:
receive, from another base station apparatus, a logical channel of data, a priority of the logical channel of data, data control information indicating a association between the logical channel of the data and a logical channel group and timer information used for notification of a buffer status report; and
notify the terminal apparatus of the data control information, the timer information, data control information of its own base station apparatus, timer information of the own base station apparatus, and associated information between the base station apparatus and the logical channel indicating which base station apparatus transmits data of which logical channel.

5. A terminal apparatus that communicates with a first base station apparatus and a second base station apparatus, the terminal apparatus being adapted to:
Receive, from the first base station apparatus and/or the second base station apparatus, data control information related to data transmission and reception and timer information used for notification of a buffer status report; and
notify any one of the first base station apparatus and the second base station apparatus of the buffer status report of uplink data based on the data control information in a case where the notification of the buffer status report is triggered.

6. The terminal apparatus according to claim 5,
Wherein, in a case where data is newly generated in a state in which an uplink buffer is in an empty state, the terminal apparatus notifies any one of the first base station apparatus and the second base station apparatus corresponding to a logical channel or a logical channel group indicated by the data control information of buffer status information of uplink data.

7. The terminal apparatus according to claim 6,
Wherein, in a case where a timer notified by the timer information expires and data is present in the uplink buffer, the terminal apparatus notifies any one of the first base station apparatus and the second base station apparatus corresponding to a logical channel or a logical channel group indicated by the data control information of buffer status information of the uplink data.

8. A wireless communication method applied to a wireless communication system in which a first base station apparatus and a second base station apparatus communicate with a terminal apparatus, the method comprising:
a step of notifying, by the first base station apparatus and/or the second base station apparatus, the terminal apparatus of data control information related to data transmission and reception of the terminal apparatus and timer information used for notification of a buffer status report; and
a step of notifying, by the terminal apparatus, any one of the first base station apparatus and the second base station apparatus of the buffer status report of uplink data based on the data control information in a case where the notification of the buffer status report is triggered.

9. An integrated circuit applied to a base station apparatus which is connected to another base station apparatus and communicates with a terminal apparatus, the integrated circuit comprising:
means for receiving, from another base station apparatus, a logical channel of data, a priority of the logical channel of data, data control information indicating an association between the logical channel of data and a logical channel group and timer information used for notification of a buffer status report; and
means for notifying the terminal apparatus of the data control information, the timer information, data control information of its own base station apparatus, timer information of the own base station apparatus, and associated information between the base station apparatus and the logical channel indicating which base station apparatus transmits data of which logical channel.

10. An integrated circuit applied to a terminal apparatus that communicates with a first base station apparatus and a second base station apparatus, the integrated circuit comprising:
means for receiving, from the first base station apparatus and/or the second base station apparatus, data control information related to data transmission and reception and timer information used for notification of a buffer status report, and for notifying any one of the first base station apparatus and the second base station apparatus of a buffer status report of uplink data based on the data control information in a case where the notification of the buffer status report is triggered.
